# EUROPÄISCHE PATENTSCHRIFT

(11) **EP 1 722 145 B1**
(45) Veröffentlichungstag und Bekanntmachung des Hinweises auf die Patenterteilung: **05.01.2011**
(21) Anmeldenummer: 06006246.0
(22) Anmeldetag: 27.03.2006
(51) Int. Cl.: F16L 21/08, E04D 13/08

(54) **Rohrelement mit Schutzelement**
Tubular element with protection element
Elément tubulaire avec élément de protection

(30) Priorität: 13.05.2005 DE 202005009503 U
(43) Veröffentlichungstag der Anmeldung: 15.11.2006
(73) Patentinhaber: Metallwarenfabrik Marktoberdorf GmbH & Co. KG, 87616 Marktoberdorf (DE)
(72) Erfinder: EURISCH, Johannes, 87674 Immenhofen (DE)
(74) Vertreter: Tiesmeyer, Johannes

(56) Entgegenhaltungen:
- EP-A- 1 531 208
- GB-A- 191 005 290

## Beschreibung

Die vorliegende Erfindung betrifft ein Rohrelement als Rohrkomponente eines Stecksystems aus wenigstens zwei Rohrkomponenten zur Herstellung eines Leitungssystems, insbesondere als Teil eines Dachentwässerungssystems, wobei die Rohrkomponenten zur Herstellung einer Steckverbindung aneinander anschließbar sind und wobei das Rohrelement an einem Steckende eine insbesondere als Sicke ausgebildete Nut aufweist, in der ein der Sicherung der Steckverbindung dienendes Klemmelement, insbesondere aus Metall, angeordnet ist.

Ein solches Rohrelement ist als Komponente eines in der anhängigen deutschen Patentanmeldung Nr. 10353660.4 bzw. in der europäischen Patentanmeldung 04025417.9 der Anmelderin beanspruchten Leitungssystems zum Ableiten von Flüssigkeit erwähnt. Der Inhalt dieser beiden Patentanmeldungen, welche alle Merkmale der Oberbegriffe der Ansprüche 1 und 2 offenbaren, wird hiermit in die vorliegende Anmeldung einbezogen.

Es hat sich bei der Verwendung von solchen Rohrelementen gezeigt, dass nach einem Ineinanderstapeln von solchen Rohrelementen, beispielsweise zur Lagerung bzw. zum Transport, das Herausnehmen der einzelnen Rohrelemente aus dem Stapel aufgrund der Klemmwirkung der Klemmelemente erschwert sein kann. Ferner kann bei unachtsamer Handhabung eines solchen Rohrelements eine Verletzungsgefahr am insbesondere scharfkantigen, ggf. verzahnten Klemmelement gegeben sein.

Aufgabe der vorliegenden Erfindung ist es daher, ein Rohrelement bereitzustellen, welches sowohl eine verbesserte, montagefreundliche und insbesondere optisch unauffällige Steckverbindungssicherung zulässt, als auch Platz sparend gelagert bzw. transportiert werden kann, wobei das Verletzungsrisiko bei der Handhabung eines solchen Rohrelements verringert werden soll.

Diese Aufgabe wird gemäß der technischen Lehre des Anspruchs 1 oder des Anspruchs 2 gelöst.

Damit das Klemmelement beim Ineinanderstapeln von mehreren Rohrelementen seine Klemmwirkung nicht entfalten kann, weist das Klemmelement erfindungsgemäß ein vor Herstellung der Steckverbindung aus einer schützenden Position entfernbares Schutzelement auf. Mehrere Rohrelemente gemäß der Erfindung können somit bei am Klemmelement angebrachtem Schutzelement auf einfache Weise ineinander gestapelt werden und mit geringem Kraftaufwand wieder auseinander genommen werden, da durch das Schutzelement eine übermäßige Klemmwirkung bzw. Krallwirkung des Klemmelements zwischen zwei ineinander gestapelten Rohrelementen verhindert ist. Ferner schützt das Schutzelement einen das Rohrelement handhabenden Anwender vor Verletzungen am Klemmelement. Wird das Schutzelement entfernt, kann das Klemmelement des Rohrelements die andere Rohrkomponente bei Herstellung der Steckverbindung in der gewünschten Weise klemmend beaufschlagen.

Zur verbesserten Steckverbindungssicherung kann das Steckende des Rohrelements als Einsteckende ausgebildet sein, das im Steckende der anderen Rohrkomponente aufnehmbar ist, wobei sich die insbesondere als Sicke ausgebildete Nut des Rohrelements nach radial innen erstreckt. Alternativ hierzu wird vorgeschlagen, dass das Steckende des Rohrelements eine Einstecköffnung aufweist, in dem das Steckende der anderen Rohrkomponente aufnehmbar ist, wobei sich die insbesondere als Sicke ausgebildete Nut des Rohrelements nach radial außen erstreckt.

Um eine verbesserte Sicherung der Steckverbindung zu erreichen, kann das Klemmelement am Rohrelement formschlüssig fixiert, insbesondere angenietet sein. Hierdurch wird auch gewährleistet, dass das Klemmelement bei der Lagerung, beim Transport und der Endmontage nicht versehentlich vom Rohrelement entfernt wird.

Besonders vorteilhaft ist es, wenn das Klemmelement wenigstens einen insbesondere scharfkantigen Krallabschnitt aufweist, mit dem es sich radial in Richtung aus der Nut des Rohrelements heraus erstreckt, derart, dass der Krallabschnitt mit der betreffenden anderen Rohrkomponente an dessen Steckende verkrallend in Eingriff kommen kann, um einer Trennbewegung der Rohrelemente relativ zueinander entgegenzuwirken. In diesem Zusammenhang wird ferner vorgeschlagen, dass der Krallabschnitt bei entferntem Schutzelement vor dem Zusammenstecken der Rohrkomponenten orthogonal zur Rohrelementachse oder schräg dazu in axialer Richtung weg von dem stirnseitigen Ende des die Nut mit dem darin aufgenommenen Klemmelement aufweisenden Steckendes des Rohrelementes orientiert ist, so dass er beim Zusammenstecken des Rohrelementes und der anderen Rohrkomponente von der anderen Rohrkomponente unter Aufrechterhaltung der gegenseitigen Beaufschlagung zwischen dem Krallabschnitt und der anderen Rohrkomponente zumindest teilweise in die Nut und dabei axial in Richtung weg von dem stirnseitigen Ende des die Nut aufweisenden Steckendes des einen Rohrelementes verdrängt werden kann.

Für eine weiter verbesserte Klemmwirkung zur Sicherung der Steckverbindung kann der Krallabschnitt eine Verzahnung aufweisen, wobei die Zähne einer solchen Verzahnung mit der an dem Rohrelement anzubringenden anderen Rohrkomponente krallenartig bzw. hakenartig in Eingriff kommen.

Das Klemmelement kann gemäß einer vorteilhaften Ausgestaltung des Rohrelements wenigstens eine Zunge mit dem Krallabschnitt an einem ihrer Enden aufweisen, wobei die Zunge insbesondere mehrfach abgewinkelt ist. Eine solche Zunge ist produktionstechnisch einfach herstellbar und durch die insbesondere mehrfache Abwinkelung kann die Steifheit des Klemmelements und somit die Stärke der Klemmwirkung beeinflusst werden.

Alternativ hierzu wird vorgeschlagen, dass das Klemmelement als insbesondere unterbrochenes Ringelement ausgebildet ist, das in einer am Umfang des Rohrelements umlaufenden Nut aufgenommen ist.

Bevorzugterweise ist das Rohrelement aus Metall, insbesondere Edelstahl oder einer Kupferlegierung gebildet. Das Klemmelement kann aus einem Stahl, insbesondere aus gehärtetem Stahl gebildet sein.

In einer besonders vorteilhaften Ausführungsform der Erfindung ist das Rohrelement ein Ablaufstutzen zum Anbringen an einem Dachrinnenelement, wobei am Rohrelement die andere Rohrkomponente in Form eines Ablaufrohrbogens anzubringen ist.

Das am Rohrelement angebrachte Schutzelement kann im Wesentlichen U-förmig ausgebildet sein, wobei es einen Schutzschenkel und einen Halteschenkel aufweist, welche über einen Verbindungsabschnitt miteinander verbunden sind. Vorzugsweise ist das Schutzelement einstückig, insbesondere als Clip, ausgebildet. Als Material für das Schutzelement kann ein Kunststoff, insbesondere Polypropylen, und/oder Kautschuk verwendet werden.

Bevorzugterweise ist das Klemmelement zwischen dem Schutzschenkel und dem Halteschenkel angeordnet, wobei der Halteschenkel und der Schutzschenkel vermittels des Verbindungsabschnitts gegeneinander vorgespannt sind, so dass sie auf das Klemmelement eine Druckkraft ausüben, die zur Fixierung des Schutzelements am Rohrelement dient. Hierdurch wird erreicht, dass das Schutzelement bei der Lagerung bzw. beim Transport sicher am Rohrelement angebracht ist und im Normalfall nicht von diesem abfallen kann.

Der Verbindungsabschnitt kann bogenförmig sein, und insbesondere in seinem bogenförmigen Krümmungsbereich eine wenigstens teilweise vergrößerte Querschnittsfläche aufweisen, um im Verbindungsabschnitt wirkende Biegespannungen aufnehmen zu können, die beim Voneinanderwegdrücken des Halteschenkels und des Schutzschenkels entgegen der Druckkraft entstehen. Der Schutzschenkel verläuft vorzugsweise ausgehend vomVerbindungsabschnitt im Wesentlichen geradlinig, wodurch eine gute Stapelbarkeit der Rohrelemente mit angebrachtem Schutzelement gewährleistet ist, weil der geradlinige Schutzschenkel den Platzbedarf beim Stapeln von Rohrelementen kaum vergrößert.

Der Halteschenkel kann mehrfach abgewinkelt sein und ausgehend vom Verbindungsabschnitt zuerst eine relativ zum Schutzschenkel im Wesentlichen konkave Krümmung und anschließend eine im Wesentlichen konvexe Krümmung aufweisen. Hierbei ist es bevorzugt, dass sich an die konvexe Krümmung ein im Wesentlichen geradliniger Endabschnitt des Halteschenkels anschließt.

Durch die Ausbildung einer konkaven Krümmung kann der Halteschenkel in formschlüssige Anlage an einen Niet kommen, durch den das Klemmelement am Steckende des Rohrelements fixiert ist. Hierdurch kann das Abfallen des Schutzelements während der Lagerung bzw. dem Transport von Rohrelementen verhindert werden.

Es ist ferner bevorzugt, dass der Endabschnitt des Halteschenkels und der im Wesentlichen geradlinige Schutzschenkel an ihren vom Verbindungsabschnitt entfernten Enden jeweils einen im Wesentlichen kreisförmigen Abschlusswulst aufweisen. Hierdurch kann das Aufsetzen des Schutzelements auf das Klemmelement bzw. das das Klemmelement aufweisende Steckende des Rohrelements vereinfacht werden. Ferner können die Abschlusswülste beim Entfernen des Schutzelements gefahrlos von einem Anwender ergriffen werden, da sie keine scharfen Kanten aufweisen.

Der Endabschnitt des Halteschenkels und der Schutzschenkel können in zwei sich schneidenden Ebenen liegen, so dass sie eine Einführöffnung bilden, die sich zum Verbindungsabschnitt hin verengt und in die das Rohrelement eingeführt werden kann. Eine solche im Prinzip V-förmige Ausrichtung des Endabschnitts des Halteschenkels und des Schutzschenkels zueinander stellt eine relativ große Einführöffnung bereit, in die das Rohrelement einfach einführbar ist. Ferner bietet ein schräg abstehender Endabschnitt des Halteschenkels einen für einen Anwender ergreifbaren Abschnitt des Schutzelements, so dass das Schutzelement einfach vom Rohrelement entfernt werden kann, bevor das Rohrelement in Steckverbindung mit einer anderen Rohrkomponente gebracht wird.

Im Folgenden werden die Vorteile der Erfindung anhand von Beispielen unter Bezugnahme auf die schematischen Zeichnungen beschrieben. Es zeigen:
- Fig. 1: ein Anwendungsbeispiel eines erfindungsgemäßen Rohrelements in einem Leitungssystem als Regenfallrohrsystem an einem Haus,
- Fig. 2: einen Ablaufstutzen als Ausführungsform des erfindungsgemäßen Rohrelements mit einer Zunge als Klemmelement,
- Fig. 3: eine Frontansicht der Zunge gemäß dem Ausführungsbeispiel,
- Fig. 4a: eine Frontansicht eines Schutzelements,
- Fig. 4b: eine Seitenansicht des Schutzelements,
- Fig. 5: einen Teilschnitt entlang der Linie V-V der Figur 2 des Ablaufstut- zens mit daran angebrachtem Schutzelement.

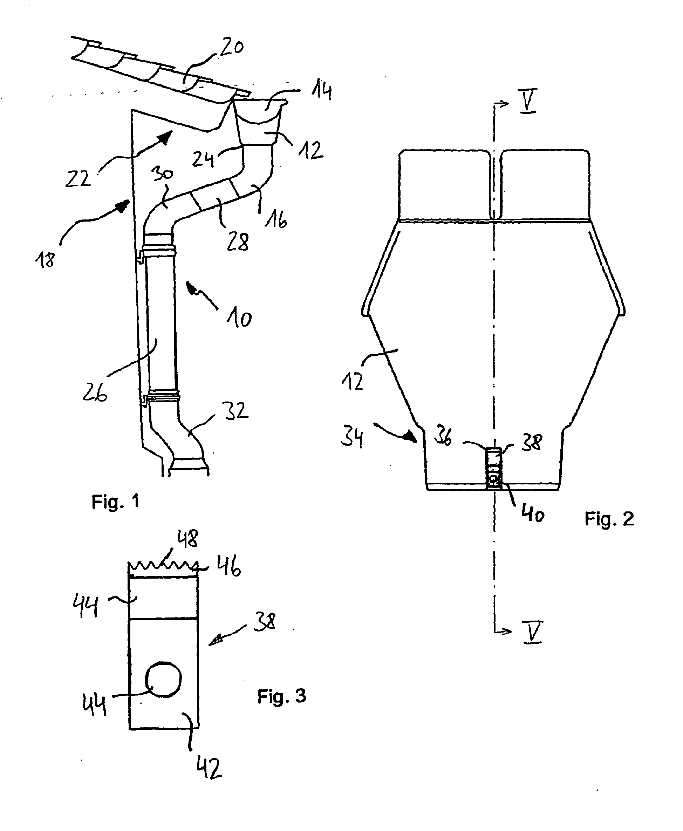

Die Figur 1 zeigt ein in einem Regenfallrohrsystem 10 eingebautes erfindungsgemäßes Rohrelement 12, welches mit einer Dachrinne 14 und einem Ablaufrohrbogen 16 verbunden ist. Das erfindungsgemäße Rohrelement 12 ist im Ausführungsbeispiel ein Ablaufstutzen. Das Regenfallrohrsystem 10 ist an einer Hauswand 18 eines Hauses angebracht, wobei das Haus ein Dach 20 aufweist, an dessen äußerem Ende die nach oben offene Dachrinne 14 verläuft. Der Ablaufstutzen 12 leitet das von der Dachrinne 14 gesammelte Regenwasser trichterförmig in das Regenfallrohrsystem 10 ein. Um den aufgrund eines Überstandes 22 von der Hauswand 18 beabstandeten oberen Bereich des Regenfallrohrsystems 10 an den nahe an der Hauswand 18 befestigten unteren Bereich des Regenfallsrohrsystems 10 heranzuführen, ist am Ablaufstutzen 12 der als weitere Rohrkomponente identifizierbare Ablaufrohrbogen 16 angebracht. Der Ablaufstutzen 12 und der Ablaufrohrbogen 16 sind ineinander gesteckt, so dass sie sich teilweise überlappen und zwischen ihnen eine Steckverbindung (bei 24) vorhanden ist. Der Ablaufrohrbogen 16 ist bogenförmig ausgestaltet und so ausgerichtet, dass er das Regenwasser in ein an der Hauswand 18 befestigtes, vertikales Fallrohr 26 führt. Zwischen dem Ablaufrohrbogen 16 und dem geraden, vertikalen Fallrohr 26 sind zur Überbrückung der Distanz zwischen dem Ablaufrohrbogen 16 und dem vertikalen Fallrohr 26 ein gerades Zwischenrohrstück 28 und ein weiterer Ablaufrohrbogen 30 angeordnet. In Abflussrichtung des Regenwassers schließt sich an das vertikale Fallrohr 26 ein weiterer Ablaufrohrbogen 32 an, der das Regenwasser in einen unteren Bereich des Regenfallrohrsystems 10 überführt. Dieser untere Bereich verläuft entlang der Hauswand 18 senkrecht in Richtung des Bodens. Das Rohrelement bzw. der Ablaufstutzen 12 sowie die anderen Rohrkomponenten, nämlich die Dachrinne 14, der Ablaufrohrbogen 16, die geraden Rohrstücke 26 und 28 sowie weitere Ablaufrohre 30 und 32, sind hier aus Edelstahl. Sie können aber ebenfalls aus einer Kupferlegierung, einem anderen Metall oder einem Kunststoffmaterial sein.

Fig. 2 zeigt den Ablaufstutzen 12 gemäß der Ausführungsform des erfindungsgemäßen Rohrelements. An seinem in Abflussrichtung unteren Ende weist der Ablaufstutzen 12 ein Steckende 34 auf, welches hier als Einsteckende ausgebildet ist, das in einem Steckende des Ablaufrohrbogens 16 aufgenommen wird, wenn der Ablaufstutzen 12 und der Ablaufrohrbogen 16 zusammengesteckt werden. Im Einsteckende 34 ist eine sich nach radial innen erstreckende und in axialer Richtung verlaufende Nut 36 ausgebildet, in der ein als längliche Zunge ausgebildetes Klemmelement 38 vermittels einer Nietverbindung 40 befestigt ist. Das Steckende 34 kann ggf. konisch verlaufen und weist einen gegenüber dem übrigen Ablaufstutzen 12 verkleinerten äußeren Durchmesser auf. Die Nut 36 ist an einer beliebigen Stelle auf dem Umfang des Einsteckendes 34 vorgesehen.

Fig. 3 zeigt eine vergrößerte Frontansicht der länglichen Zunge 38. Sie weist in einem unteren Bereich 42 ein Loch 44 auf, durch welches ein Niet zur Verbindung der Zunge mit dem Ablaufstutzen eingesteckt werden kann. In einem zweifach abgewinkelten oberen Bereich 44 ist der Krallabschnitt 46 ausgebildet, welcher hier mehrere scharfkantige Zähne 48 aufweist. Aufgrund der zweifachen Abwinkelung stehen der Krallabschnitt 46 bzw. die Zähne 48 in radialer Richtung bezogen auf das Einsteckende 34 aus der Nut 36 vor. Diese Zähne 48 verkrallen sich im zusammengesteckten Zustand des Ablaufstutzens 12 mit dem Ablaufrohrbogen 16 im Ablaufrohrbogen 16, wobei diese Verkrallung beim Auseinanderziehen des Ablaufstutzens 12 und des Ablaufrohrbogens 16 verstärkt wird.

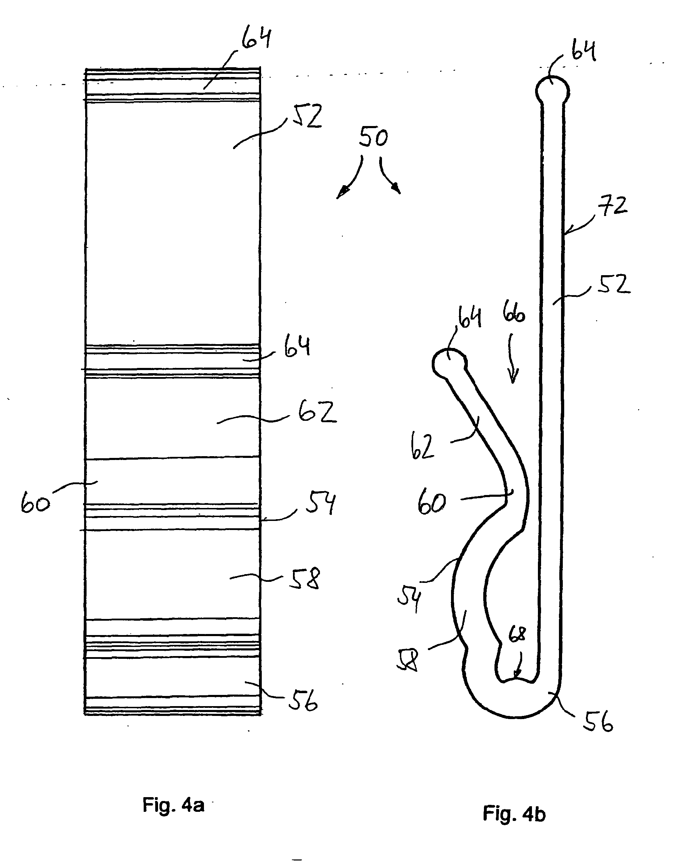

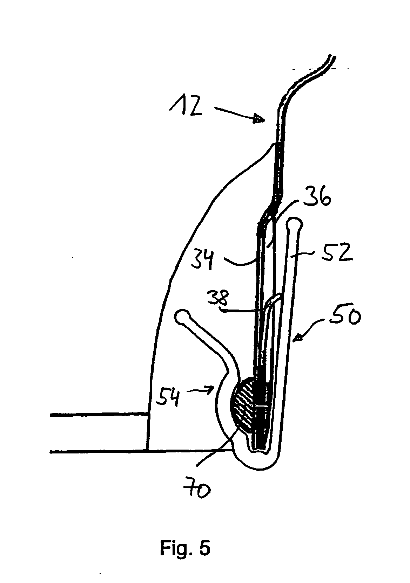

Diese verkrallende Wirkung des Klemmelements 38, insbesondere der Zunge 38, kann auch bei einem Ineinanderstapeln von mehreren Ablaufstutzen 12, beispielsweise zu Transport- und Lagerzwecken, auftreten, wodurch das Entfernen eines einzelnen Ablaufstutzens 12 aus einem solchen Stapel erschwert ist. Ein über das Klemmelement 38 bzw. die Zunge 38 und das Einsteckende 34 aufschiebbares Schutzelement 50 ist in den Figuren 4a und 4b sowie in montiertem Zustand in Fig. 5 dargestellt. Das Schutzelement 50 ist im Ausführungsbeispiel als einstückiger Clip ausgebildet, wobei es eine im Wesentlichen U-förmige Form aufweist. Das Schutzelement 50 weist einen Schutzschenkel 52, einen Halteschenkel 54 und einen diese beiden Schenkel 52, 54 verbindenden Verbindungsabschnitt 56 auf. Der Schutzschenkel 52 und der Halteschenkel 54 sind mittels des Verbindungsabschnitts 56 gegeneinander vorgespannt, so dass sie nach Aufsetzen des Schutzelements 50 auf das Einsteckende 34 mit dem daran angebrachten Klemmelement 38 eine Klemmwirkung auf diese ausüben.

Zur Vereinfachung der Herstellung ist das Schutzelement 50 einstückig und aus einem Kunststoffmaterial, insbesondere Polypropylen, als Spritzgussteil ausgebildet. In diesem Zusammenhang wird darauf hingewiesen, dass es auch denkbar ist, ein solches Schutzelement als Überzug über den oberen Bereich 44 mit dem Klemmabschnitt 46 (vgl. Fig. 3) der Zunge 38 auszuführen. Ein solcher Überzug, insbesondere erreicht durch Eintauchen der Zunge in ein entsprechendes Kunststoffmaterial, ist dann beispielsweise bei der Montage des Ablaufstutzens 12 mittels mechanischer Einwirkung entfernbar. Auch durch ein als Überzug ausgebildetes Schutzelement kann das Verklemmen von ineinander gestapelten Rohrstutzen verhindert werden.

In der Ausführungsform gemäß Fig. 4a und 4b weist der Halteschenkel 54 einen relativ zum Schutzschenkel 52 konkav gekrümmten Abschnitt 58 auf, an den sich ein relativ zum Schutzschenkel 52 konvex gekrümmter Abschnitt 60 anschließt. An den konvex gekrümmten Abschnitt 60 schließt sich ein im Wesentlichen geradliniger Endabschnitt 62 an, der wie der Schutzschenkel 52 an seinem Ende einen im Wesentlichen kreisförmigen Abschlusswulst 64 aufweist. Der Endabschnitt 62 und der Schutzschenkel 52 sind in zwei sich schneidenden Ebenen angeordnet, so dass sie eine V-förmige Einführöffnung 66 bilden, die sich zum Verbindungsabschnitt 56 hin verengt. Der Verbindungsabschnitt 56 ist bogenförmig ausgeführt und weist im Bereich zwischen dem Schutzschenkel 52 und dem Halteschenkel 54 eine vergrößerte Querschnittsfläche auf, was durch eine Ausbeulung 68 in Fig. 4b angedeutet ist. Es ist ferner darauf hinzuweisen, dass der Verbindungsabschnitt 56 und der konkave Abschnitt 58, in denen die größten Spannungen beim Auseinanderdrücken der beiden Schenkel 52, 54 vorhanden sind, eine im Wesentlichen gleich große Querschnittsfläche aufweisen, welche gegenüber der Querschnittsfläche des Schutzschenkels 52 und des geradlinigen Endabschnitts 62 vergrößert ist. Der konkav ausgebildete Abschnitt 58 nimmt, wie dies in Fig. 5 gezeigt ist, auf seiner dem Schutzschenkel 52 zugewandten Seite einen Niet 70 formschlüssig auf, wodurch ein sicherer Halt des Schutzelements 50 am Einsteckende 34 bzw. dem Klemmelement 38 gewährleistet ist.

Unter Bezugnahme auf Fig. 5 wird darauf hingewiesen, dass der Schutzschenkel 52 eine Länge aufweist, die in etwa so bemessen ist, dass der Schutzschenkel bei starkem Zusammendrücken in die im Einsteckende 34 ausgebildete Nut 36 wenigstens teilweise eintauchen kann. Hierdurch wird erreicht, dass der Schutzschenkel 52 nur unwesentlich über den außerhalb des Nutbereichs definierten Umfang des Einsteckendes 34 hervorsteht.

Es ist vorgesehen, dass der Schutzschenkel 52 eine sich in tangentialer Richtung bezogen auf das Einsteckende 34 erstreckende Breite aufweist, welche wenigstens der Breite der Zunge 38 entspricht, damit der Klemmabschnitt 46 und insbesondere die Zähne 48 vom Schutzschenkel 52 vollständig bedeckt sind. Die vom Klemmelement 38 abgewandte Oberfläche 72 des Schutzschenkels 52 bietet beim Ineinanderstapeln von Ablaufstutzen 12 ineinander eine Gleitfläche, an der zwei Ablaufstutzen aneinander anliegen können und leicht voneinander entfernbar sind, weil zwischen der Gleitfläche 72 und einem daran anliegenden Teil eines anderen Ablaufstutzens eine relativ geringe Reibkraft wirkt. Ein Verklemmen ist aufgrund des durch den Schutzschenkel 52 abgedeckten Klemmelements 38 auf jeden Fall verhindert.

Im Hinblick auf eine nicht dargestellte Ausführungsform des Klemmelements in Form eines in einer umlaufenden Nut angebrachten Ringelements, das über den Umfang verteilt mehrere radial nach außen vorstehende Klemmabschnitte aufweist, sei darauf hingewiesen, dass zum Ineinanderstapeln von Ablaufstutzen mit einem solchen Klemmelement mehrere, insbesondere drei Schutzelemente gemäß der hier vorgestellten Ausführungsform angebracht werden können. Wenn diese drei Schutzelemente in etwa gleichmäßigem Abstand voneinander am Umfang des Steckendes angebracht sind, ergeben sich beim Ineinanderstapeln von solchen Ablaufstutzen jeweils drei Anlageflächen, welche von den oben beschriebenen Gleitflächen der drei Schutzschenkel gebildet werden. Hierdurch kann gewährleistet werden, dass ineinander gestapelte Ablaufstutzen nur an diesen drei Flächen aneinander anliegen, jedoch nicht an den nicht schützend abgedeckten Abschnitten des ringförmigen Klemmelements miteinander verkrallend in Eingriff kommen.

Bei der Montage eines Ablaufstutzens 12 in einem Regenfallrohrsystem 10 kann nach Anbringung des Ablaufstutzens 12 an der Dachrinne 14 das Schutzelement 50 durch einfaches Aufweiten und Ziehen am Endabschnitt 62 des Halteabschnitts 54 gelöst und anschließend vom Ablaufstutzen 12 entfernt werden. Somit ist bis kurz vor der Herstellung einer Steckverbindung zwischen dem Ablaufstutzen 12 und einer weiteren Rohrkomponente, insbesondere dem Ablaufrohrbogen 16, das Klemmelement durch das Schutzelement 50 abgedeckt, wodurch die Verletzungsgefahr für einen Anwender, insbesondere am Klemmabschnitt 46 und den Zähnen 48, beim Transport, der Lagerung und der Montage verringert ist. Beim Entfernen des Schutzelements 50 sind auch die an den beiden Schenkeln 52, 54 ausgebildeten Abschlusswülste 64 hilfreich, weil sie das Ergreifen eines solchen Schenkels vereinfachen, wobei die Formgebung auch Verletzungen am Schutzelement selbst vorbeugt, da dieses keine scharfen Kanten, insbesondere an Enden, die von einem Anwender ergriffen werden, aufweist.

Die in der Ausführungsform des Schutzelements 50 detailliert beschriebene Form kann je nach Bedarf auch anders sein; so könnte beispielsweise bei einer Zunge, welche durch eine Punktschweißung am Einsteckende 34 angebracht ist, der konkave Abschnitt 58 im Wesentlichen geradlinig oder, verbunden mit dem geradlinigen Endabschnitt 62, als insgesamt konvex gekrümmter Abschnitt ausgebildet sein, weil kein Formschluss mit einem Niet notwendig ist. Ferner wird auch darauf hingewiesen, dass ein solches Schutzelement nicht zwangsweise von unten über das Einsteckende und das Klemmelement aufgesteckt werden kann, sondern dass auch Ausführungsformen möglich sind, welche nur über den radial vorstehenden oberen Abschnitt 44 der Zunge 38 gesteckt sind, wie dies bereits oben unter Bezugnahme auf ein als Überzug ausgestaltetes Schutzelement angesprochen worden ist.

## Patentansprüche

1. Rohrelement (12) als Rohrkomponente eines Stecksystems aus wenigstens zwei Rohrkomponenten (12, 16) zur Herstellung eines Leitungssystems (10), insbesondere als Teil eines Dachentwässerungssystems, wobei die Rohrkomponenten (12, 16) zur Herstellung einer Steckverbindung (24) aneinander anschließbar sind und wobei das Rohrelement (12) an einem Steckende (34) eine insbesondere als Sicke ausgebildete Nut (36) aufweist, in der ein der Sicherung der Steckverbindung dienender Klemmelement (38), insbesondere aus Metall, angeordnet ist, **dadurch gekennzeichnet, daß** das Klemmelement (38) ein vor Herstellung der Steckverbindung aus einer schützenden Position entfernbares Schutzelement (50) aufweist, so dass das Klemmelement (38) nach Entfernung des Schutzelementes (50) die andere Rohrkomponente (16) bei Herstellung der Steckverbindung klemmend beaufschlagen kann.

2. Rohrelement als Rohrkomponente eines Stecksystems aus wenigstens zwei Rohrkomponenten (12, 16) zur Herstellung eines Leitungssystems (10), insbesondere als Teil eines Dachentwässerungssystems, wobei die Rohrkomponenten (12, 16) zur Herstellung einer Steckverbindung (24) aneinander anschließbar sind und wobei an einem Steckende (34) des Rohrelementes (12) ein der Sicherung der Steckverbindung dienendes Klemmelement (38), insbesondere aus Metall, angeordnet ist, **dadurch gekennzeichnet, daß** das Klemmelement (38) einen vor Herstellung der Steckverbindung zumindest teilweise zerstörbaren Schutzüberzug insbesondere aus Kunststoff aufweist, so dass das Klemmelement (38) nach Zerstörung des Schutzüberzugs die andere Rohrkomponente (16) bei Herstellung der Steckverbindung klemmend beaufschlagen kann.

3. Rohrelement nach Anspruch 2, wobei das Klemmelement (38) in einer insbesondere als Sicke ausgebildeten Nut (36) angeordnet ist.

4. Rohrelement nach Anspruch 2 oder 3, wobei der Schutzüberzug durch Eintauchen, Anstreichen oder Spritzen des Klemmelementes (38) in bzw. mit nachträglich aushärtendem flüssigem Kunststoff hergestellt ist.

5. Rohrelement nach einem der vorhergehenden Ansprüche, **dadurch gekennzeichnet, dass** das Steckende (34) des Rohrelements (12) als Einsteckende (34) ausgebildet ist, das im Steckende der anderen Rohrkomponente (16) aufnehmbar ist, wobei sich die insbesondere als Sicke ausgebildete Nut (36) des Rohrelements (12) nach radial innen erstreckt.

6. Rohrelement nach einem der Ansprüche 1 bis 4, **dadurch gekennzeichnet, dass** das Steckende des Rohrelements eine Einstecköffnung aufweist, in dem das Steckende der anderen Rohrkomponente aufnehmbar ist, wobei sich die insbesondere als Sicke ausgebildete Nut des Rohrelements nach radial außen erstreckt.

7. Rohrelement nach einem der Ansprüche 1 bis 6, **dadurch gekennzeichnet, dass** das Klemmelement (38) am Rohrelement (12) formschlüssig fixiert, insbesondere angenietet ist.

8. Rohrelement nach einem der Ansprüche 1 bis 7, **dadurch gekennzeichnet, dass** das Klemmelement (38) wenigstens einen insbesondere scharfkantigen Krallabschnitt (46) aufweist, mit dem es sich radial in Richtung aus der Nut (36) des Rohrelements (12) heraus erstreckt, derart, dass der Krallabschnitt (46) mit der betreffenden anderen Rohrkomponente (16) an dessen Steckende verkrallend in Eingriff kommen kann, um einer Trennbewegung der Rohrelemente (12, 16) relativ zueinander entgegenzuwirken.

9. Rohrelement nach Anspruch 8, **dadurch gekennzeichnet, dass** der Krallabschnitt (46) bei entferntem Schutzelement (50) vor dem Zusammenstecken der Rohrkomponenten (12, 16) orthogonal zur Rohrelementachse oder schräg dazu in axialer Richtung weg von dem stirnseitigen Ende des die Nut (36) mit dem darin aufgenommenen Klemmelement (38) aufweisenden Steckendes des Rohrelementes (12) orientiert ist, so dass er beim Zusammenstecken des Rohrelementes (12) und der anderen Rohrkomponente (16) von der anderen Rohrkomponente (16) unter Aufrechterhaltung der gegenseitigen Beaufschlagung zwischen dem Krallabschnitt (46) und der anderen Rohrkomponente (16) zumindest teilweise in die Nut (36) und dabei axial in Richtung weg von dem stirnseitigen Ende des die Nut (36) aufweisenden Steckendes (34) des Rohrelementes (12) verdrängt werden kann.

10. Rohrelement nach einem der Ansprüche 8 oder 9, **dadurch gekennzeichnet, dass** der Krallabschnitt (46) verzahnt ist.

11. Rohrelement nach einem der Ansprüche 8 bis 10, **dadurch gekennzeichnet, dass** das Klemmelement wenigstens eine Zunge (38) mit dem Krallabschnitt (46) an einem ihrer Enden aufweist, wobei die Zunge (38) insbesondere mehrfach abgewinkelt ist.

12. Rohrelement nach einem der Ansprüche 1 bis 10, **dadurch gekennzeichnet, dass** das Klemmelement als insbesondere unterbrochenes Ringelement ausgebildet ist, das in einer am Umfang des Rohrelementes umlaufenden Nut aufgenommen ist.

13. Rohrelement nach einem der vorhergehenden Ansprüche, **dadurch gekennzeichnet, dass** das Rohrelement (12) aus Metall, insbesondere Edelstahl oder einer Kupferlegierung, gebildet ist.

14. Rohrelement nach einem der vorhergehenden Ansprüche, **dadurch gekennzeichnet, dass** das Klemmelement (38) aus einem Stahl, insbesondere aus gehärtetem Stahl, gebildet ist.

15. Rohrelement nach einem der vorhergehenden Ansprüche, **dadurch gekennzeichnet, dass** das Rohrelement ein Ablaufstutzen (12) zum Anbringen an einem Dachrinnenelement (14) ist, wobei am Rohrelement die andere Rohrkomponente in Form eines Ablaufrohrbogens (16) anzubringen ist.

16. Rohrelement nach Anspruch 1 oder einem der darauf rückbezogenen Ansprüche, **dadurch gekennzeichnet, dass** das Schutzelement (50) im Wesentlichen U-förmig ausgebildet ist, wobei es einen Schutzschenkel (52) und einen Halteschenkel (54) aufweist, welche über einen Verbindungsabschnitt (56) miteinander verbunden sind.

17. Rohrelement nach Anspruch 16, **dadurch gekennzeichnet, dass** das Schutzelement (50) einstückig ausgebildet ist und aus Kunststoff, insbesondere Polypropylen, und/oder Kautschuk gebildet ist.

18. Rohrelement nach Anspruch 16 oder 17, **dadurch gekennzeichnet, dass** das Klemmelement (38) zwischen dem Schutzschenkel (52) und dem Halteschenkel (54) angeordnet ist.

19. Rohrelement nach Anspruch 18, **dadurch gekennzeichnet, dass** der Halteschenkel (54) und der Schutzschenkel (52) vermittels des Verbindungsabschnitts (56) gegeneinander vorgespannt sind, so dass sie auf das Klemmelement (38) eine Druckkraft ausüben, die zur Fixierung des Schutzelements (50) am Rohrelement (12) dient.

20. Rohrelement nach Anspruch 19, **dadurch gekennzeichnet, dass** der Verbindungsabschnitt (56) bogenförmig ist und insbesondere in seinem bogenförmigen Krümmungsbereich eine wenigstens teilweise vergrößerte Querschnittsfläche aufweist, um im Verbindungsabschnitt (56) wirkende Biegespannungen aufnehmen zu können, die beim voneinander Wegdrücken des Halteschenkels (54) und des Schutzschenkels (52) entgegen der Druckkraft entstehen.

21. Rohrelement nach einem der Ansprüche 16 bis 20, **dadurch gekennzeichnet, dass** der Schutzschenkel (52) ausgehend vom Verbindungsabschnitt (56) im Wesentlichen geradlinig verläuft.

22. Rohrelement nach einem der Ansprüche 16 bis 21, **dadurch gekennzeichnet, dass** der Halteschenkel (54) mehrfach abgewinkelt ist.

23. Rohrelement nach Anspruch 22, **dadurch gekennzeichnet, dass** der Halteschenkel (54) ausgehend vom Verbindungsabschnitt (56) zuerst eine relativ zum Schutzschenkel (52) im Wesentlichen konkave Krümmung (58) und anschließend eine im Wesentlichen konvexe Krümmung (60) aufweist.

24. Rohrelement nach Anspruch 23, **dadurch gekennzeichnet, dass** der Halteschenkel (54) einen an die konvexe Krümmung (60) anschließenden, im Wesentlichen geradlinigen Endabschnitt (62) aufweist.

25. Rohrelement nach Anspruch 23 oder 24, jedenfalls nach Anspruch 7, **dadurch gekennzeichnet, dass** die konkave Krümmung (58) eine formschlüssige Anlage des Halteschenkels (54) an einem Niet (70) ermöglicht, durch den das Klemmelement (38) am Steckende (34) des Rohrelements (12) fixiert ist.

26. Rohrelement nach einem der Ansprüche 16 bis 25, jedenfalls nach Anspruch 16 und 24, **dadurch gekennzeichnet, dass** der Endabschnitt (62) des Halteschenkels (54) und der Schutzschenkel (52) an ihren vom Verbindungsabschnitt (56) entfernten Enden jeweils einen im Wesentlichen kreisförmigen Abschlusswulst (64) aufweisen.

27. Rohrelement nach einem der Ansprüche 17 bis 26, jedenfalls nach Anspruch 17 und 25, **dadurch gekennzeichnet, dass** der Endabschnitt (62) des Halteschenkels (54) und der Schutzschenkel (52) in zwei sich schneidenden Ebenen liegen, so dass sie eine Einführöffnung (66) bilden, die sich zum Verbindungsabschnitt (56) hin verengt und in die das Rohrelement (12) eingeführt werden kann.

## Claims

1. A pipe element (12) as a pipe component of a plug-type system of at least two pipe components (12,16) for producing a conduit system (10), in particular as part of a roof drainage system, wherein the pipe components (12,16) can be connected to one another to produce a plug-type connection (24) and wherein at one plug-type end (34) the pipe element (12) has a groove (36) which, in particular, is in the form of bead and in which is arranged a clamping element (38), in particular of metal, serving to secure the plug-type connection, **characterised in that** the clamping element (38) has a protective element (50), which can be removed from a protective position before producing the plug-type connection, so that the clamping element (38), after removal of the protective element (50), can act in a clamping manner on the other pipe component (16) when producing the plug-type connection.

2. A pipe element (12) as a pipe component of a plug-type system of at least two pipe components (12,16) for producing a conduit system (10), in particular as part of a roof drainage system, wherein the pipe components (12,16) can be connected to one another to produce a plug-type connection (24) and wherein a clamping element (38), in particular of metal, is arranged at one plug-type end (34) of the pipe element (12) serving to secure the plug-type connection, **characterised in that** the clamping element (38) has a protective coating, in particular of plastics material, which can be at least partly destroyed before producing the plug-type connection, so that the clamping element (38), after destruction of the protective coating, can act in a clamping manner on the other pipe component (16) when producing the plug-type connection.

3. A pipe element according to Claim 2, wherein the clamping element (38) is disposed in a groove (36) which, in particular, is in the form of a bead.

4. A pipe element according to Claim 2 or 3, wherein the protective coating is produced by dipping, painting or spraying the clamping element (38) in or with subsequently curing liquid plastics material.

5. A pipe element according to any one of the preceding Claims, **characterised in that** the plug-type end (34) of the pipe element (12) is in the form of an insert end (34) which can be accommodated in the plug-type end of the other pipe component (16), wherein the groove (36) of the pipe element (12) which, in particular, is in the form of a bead, extends radially inwards.

6. A pipe element according to any one of Claims 1 to 4, **characterised in that** plug-type end of the pipe element has an insert opening, in which the plug-type end of the other pipe component can be accommodated, wherein the groove which, in particular, is in the form of a bead, extends radially outwards.

7. A pipe element according to any one of Claims 1 to 6, **characterised in that** the clamping element (38) is secured in a form-locking manner to the pipe element (12), in particular rivetted thereto.

8. A pipe element according to any one of Claims 1 to 7, **characterised in that** the clamping element (38) has at least one, in particular sharp-edged, claw portion (46), with which it extends radially outwardly in a direction out of the groove (36) of the pipe element (12) in such a way that the claw portion (46) can come into engagement, through a digging action, with the respective other pipe component (16) at its plug-type end so as to oppose a separating movement of the pipe elements (12,16) relative to one another.

9. A pipe element according to Claim 8, **characterised in that**, with the protective element (50) removed and before the fitting- together of the pipe components (12,16), the claw portion (46) is aligned orthogonally to the pipe element axis or obliquely thereto in an axial direction away from the end-face end of the plug-type end of the pipe element (12) having the groove (36) with the clamping element (38) accommodated therein so that, upon fitting together the pipe element (12) and the other pipe component (16), it can be displaced by the other pipe component (16), while maintaining the interaction between the claw portion (46) and the other pipe component (16), at least partly into the groove (36) and thus axially in a direction away from the end-face end of plug-type end (34) of the pipe element (12) having the groove (36).

10. A pipe element according to either Claim 8 or Claim 9, **characterised in that** the claw portion (46) is toothed.

11. A pipe element according to any one of Claims 8 to 10, **characterised in that** the clamping element has at least one tongue (38) with the claw portion (46) at one of its ends, wherein the tongue (38) in particular is multiply bent.

12. A pipe element according to any one of Claims 1 to 10, **characterised in that** the clamping element is formed in particular as an interrupted annular element which is accommodated in a groove extending around the periphery of the pipe element.

13. A pipe element according to any one of the preceding Claims, **characterised in that** the pipe element (12) is formed of metal, in particular high-grade steel or a copper alloy.

14. A pipe element according to any one of the preceding Claims, **characterised in that** the clamping element (38) is formed of steel, in particular hardened steel.

15. A pipe element according to any one of the preceding Claims, **characterised in that** the pipe element has an outflow connector (12) for attachment to a gutter element (14), wherein the other pipe component is to be attached to the pipe element in the form of an outflow pipe bend (16).

16. A pipe element according to Claim 1 or any one of the Claims appended thereto, **characterised in that** the protective element (50) is substantially U-shaped, wherein it has a protecting leg (52) and a retaining leg (54), which are joined together via a connecting portion (56).

17. A pipe element according to Claim 16, **characterised in that** the protective element (50) is formed in one-piece and is formed of plastics material, in particular polypropylene, and/or of rubber.

18. A pipe element according to Claim 16 or 17, **characterised in that** the clamping element (38) is arranged between the protecting leg (52) and the retaining leg (54).

19. A pipe element according to Claim 18, **characterised in that** the retaining leg (54) and the protecting leg (52) are preloaded in relation to one another by means of the connecting portion (56) so that they exert a compressive force on the clamping element (38), which serves to secure the protective element (50) to the pipe element (12).

20. A pipe element according to Claim 19, **characterised in that** the connecting portion (56) is arcuate and particularly in its arcuate curved zone has an at least partly enlarged cross-sectional area so as to make it possible to accommodate bending stresses acting in the connecting portion (56), which arise when the retaining leg (54) and the protecting leg (52) are pressed apart counter to the compressive force.

21. A pipe element according to any one of Claims 16 to 20, **characterised in that**, starting from the connecting portion (56), the protecting leg (52) extends substantially straight.

22. A pipe element according to any one of Claims 16 to 21, **characterised in that** the retaining leg (54) is multiply bent.

23. A pipe element according to Claim 22, **characterised in that**, starting from the connecting portion (56), the retaining leg (54) firstly has a substantially concave curvature (58) relative to the protecting leg (52) and subsequently has a substantially convex curvature (60.)

24. A pipe element according to Claim 23, **characterised in that** the retaining leg (54) has a substantially straight end portion (62) adjoining the convex curvature (60).

25. A pipe element according to Claim 23 or 24, in any case according to Claim 7, **characterised in that** the concave curvature (58) makes possible form-locking abutment of the retaining leg (54) against a rivet (70), by which the clamping element (38) is secured to the plug-type end (34) of the pipe element (12).

26. A pipe element according to any one of Claims 16 to 25, in any case according to Claims 16 and 24, **characterised in that**, at their ends remote from the connecting portion (56), the end portion (62) of the retaining leg (54) and the protecting leg (52) each have a substantially circular terminal bead (64).

27. A pipe element according to any one of Claims 17 to 26, in any case according to Claims 17 and 25, **characterised in that** the end portion (62) of the retaining leg (54) and the protecting leg (52) lie in two intersecting planes so that they form an insert opening (66) which narrows towards the connecting portion (56) and into which the pipe element (12) can be inserted.

## Revendications

1. Élément tubulaire (12) en tant que composant tubulaire d'un système à enfichage formé par au moins deux composants tubulaires (12, 16) pour réaliser un système de guidage (10), en particulier sous la forme d'une partie d'un système de gouttière, lesdits composants tubulaires (12, 16) pouvant être assemblés l'un à l'autre pour former un assemblage enfiché (24) et l'élément tubulaire (12) comportant sur une extrémité d'enfichage (34) une rainure (36) réalisée en particulier sous la forme d'une cannelure, dans laquelle est agencé un élément de blocage (38), en particulier en métal, destiné à bloquer l'assemblage enfiché, **caractérisé en ce que** l'élément de blocage (38) comporte un élément de protection (50), qui peut être retiré hors d'une position de protection avant la réalisation de l'assemblage enfiché, de telle sorte que l'élément de blocage (38), après le retrait de l'élément de protection (50), peut exercer un blocage sur l'autre composant tubulaire (16) pendant la réalisation de l'assemblage enfiché.

2. Élément tubulaire (12) en tant que composant tubulaire d'un système d'enfichage formé par au moins deux composants tubulaires (12, 16) pour réaliser un système de guidage (10), en particulier sous la forme d'une partie d'un système de gouttière, lesdits composants tubulaires (12, 16) pouvant être assemblés l'un à l'autre pour former un assemblage enfiché (24), et un élément de blocage (38), en particulier en métal, destiné à bloquer l'assemblage enfiché, étant agencé sur une extrémité d'enfichage (34) de l'élément tubulaire (12), **caractérisé en ce que** l'élément de blocage (38) comporte un revêtement de protection, en particulier en matière plastique, qui peut être détérioré au moins en partie avant la réalisation de l'assemblage enfiché, de telle sorte que l'élément de blocage (38), après la détérioration du revêtement de protection, peut exercer un blocage sur l'autre composant tubulaire (16) pendant la réalisation de l'assemblage enfiché.

3. Élément tubulaire selon la revendication 2, dans lequel l'élément de blocage (38) est agencé dans une rainure (36), réalisée en particulier sous la forme d'une cannelure.

4. Élément tubulaire selon la revendication 2 ou 3, dans lequel le revêtement de protection est réalisé par immersion, enduction ou projection de l'élément de blocage (38) dans ou avec une matière plastique liquide durcissant ultérieurement.

5. Élément tubulaire selon l'une quelconque des revendications précédentes, **caractérisé en ce que** l'extrémité d'enfichage (34) de l'élément tubulaire (12) est réalisée sous la forme d'une extrémité d'enfichage (34) qui est destinée à être reçue dans l'extrémité d'enfichage de l'autre composant tubulaire (16), sachant que la rainure (36), réalisée en particulier sous forme de cannelure, de l'élément tubulaire (12) s'étend radialement vers l'intérieur.

6. Élément tubulaire selon l'une quelconque des revendications 1 à 4, **caractérisé en ce que** l'extrémité d'enfichage de l'élément tubulaire comporte une ouverture d'enfichage, dans laquelle peut être reçue l'extrémité d'enfichage de l'autre composant tubulaire, sachant que la rainure, réalisée en particulier sous forme de cannelure, de l'élément tubulaire s'étend radialement vers l'extérieur.

7. Élément tubulaire selon l'une quelconque des revendications 1 à 6, **caractérisé en ce que** l'élément de blocage (38) est fixé par conjugaison de forme sur l'élément tubulaire (12), en particulier par rivetage.

8. Élément tubulaire selon l'une quelconque des revendications 1 à 7, **caractérisé en ce que** l'élément de blocage (38) comporte au moins un tronçon à griffes (46), en particulier à arêtes vives, avec lequel il s'étend radialement hors de la rainure (36) de l'élément tubulaire (12), de telle sorte que le tronçon à griffes (46) peut venir en prise par les griffes avec l'autre composant tubulaire (16) concerné au niveau de l'extrémité d'enfichage de celui-ci, pour empêcher un mouvement de séparation des éléments tubulaires (12, 16) de l'un par rapport à l'autre.

9. Élément tubulaire selon la revendication 8, **caractérisé en ce que**, en l'absence de l'élément de protection (50) avant l'enfichage des composants tubulaires (12, 16), le tronçon à griffes (46) est orienté orthogonalement à l'axe de l'élément tubulaire ou en oblique à celui-ci dans la direction axiale s'écartant de l'extrémité frontale de l'extrémité d'enfichage de l'élément tubulaire (12), munie de la rainure (36) dans laquelle est reçue l'élément de blocage (38), de telle sorte que, au moment de l'enfichage de l'élément tubulaire (12) et de l'autre composant tubulaire (16), il peut être poussé par l'autre composant tubulaire (16), moyennant le maintien de la sollicitation réciproque entre le tronçon à griffes (46) et l'autre composant tubulaire (16), au moins partiellement dans la rainure (36) et, en l'occurrence, axialement en s'écartant de l'extrémité frontale de l'extrémité d'enfichage (34) de l'élément tubulaire (12), munie de la rainure (36).

10. Élément tubulaire selon la revendication 8 ou 9, **caractérisé en ce que** le tronçon à griffes (46) est denté.

11. Élément tubulaire selon l'une quelconque des revendications 8 à 10, **caractérisé en ce que** l'élément de blocage comporte au moins une patte (38) munie du tronçon à griffes (46) au niveau de l'une de ses extrémités, la patte (38) étant en particulier coudée à plusieurs reprises.

12. Élément tubulaire selon l'une quelconque des revendications 1 à 10, **caractérisé en ce que** l'élément de blocage est réalisé sous la forme d'un élément annulaire, en particulier interrompu, qui est reçu dans une rainure périphérique sur le pourtour de l'élément tubulaire.

13. Élément tubulaire selon l'une quelconque des revendications précédentes, **caractérisé en ce que** l'élément tubulaire (12) est réalisé en métal, en particulier en acier inoxydable ou dans un alliage de cuivre.

14. Élément tubulaire selon l'une quelconque des revendications précédentes, **caractérisé en ce que** l'élément de blocage (38) est réalisé en acier, en particulier en acier trempé.

15. Élément tubulaire selon l'une quelconque des revendications précédentes, **caractérisé en ce que** l'élément tubulaire est une tubulure d'évacuation (12) destinée à être assemblée à un élément de gouttière (14), l'autre composant tubulaire, formant le coude (16) d'un tube d'évacuation, étant destiné à être assemblé à l'élément tubulaire.

16. Élément tubulaire selon la revendication 1 ou l'une des revendications se référant à celle-ci, **caractérisé en ce que** l'élément de protection (50) est réalisé sensiblement en forme de U, sachant qu'il comporte une branche de protection (52) et une branche de fixation (54), lesquelles sont reliées l'une à l'autre par un tronçon de liaison (56).

17. Élément tubulaire selon la revendication 16, **caractérisé en ce que** l'élément de protection (50) est réalisé d'un seul tenant et en matière plastique, en particulier en polypropylène, et/ou en caoutchouc.

18. Élément tubulaire selon la revendication 16 ou 17, **caractérisé en ce que** l'élément de blocage (38) est disposé entre la branche de protection (52) et la branche de fixation (54).

19. Élément tubulaire selon la revendication 18, **caractérisé en ce que** la branche de fixation (54) et la branche de protection (52) sont précontraintes l'une contre l'autre par l'intermédiaire du tronçon de liaison (56), de telle sorte qu'elles exercent sur l'élément de blocage (38) une force de pression qui sert à la fixation de l'élément de protection (50) sur l'élément tubulaire (12).

20. Élément tubulaire selon la revendication 19, **caractérisé en ce que** le tronçon de liaison (56) est réalisé en forme d'arc et, en particulier dans sa zone de courbure en forme d'arc, comporte une surface de section au moins partiellement agrandie, pour pouvoir absorber des contraintes de flexion dans le tronçon de liaison (56), lesquelles sont générées à l'encontre de la force de pression lorsque la branche de fixation (54) et la branche de protection (52) sont poussées pour s'écarter l'une de l'autre.

21. Élément tubulaire selon l'une quelconque des revendications 16 à 20, **caractérisé en ce que** la branche de protection (52) s'étend sensiblement droite à partir du tronçon de liaison (56).

22. Élément tubulaire selon l'une quelconque des revendications 16 à 21, **caractérisé en ce que** la branche de fixation (54) est coudée plusieurs fois.

23. Élément tubulaire selon la revendication 22, **caractérisé en ce que**, à partir du tronçon de liaison (56), la branche de fixation (54) comporte d'abord une courbure (58) sensiblement concave par rapport à la branche de protection (52) et ensuite une courbure (60) sensiblement convexe.

24. Élément tubulaire selon la revendication 23, **caractérisé en ce que** la branche de fixation (54) comporte une zone d'extrémité (62) sensiblement droite dans le prolongement de la courbure (60) convexe.

25. Élément tubulaire selon la revendication 23 ou 24, en tout cas selon la revendication 7, **caractérisé en ce que** la courbure concave (58) permet un appui par conjugaison de forme de la branche de fixation (54) contre un rivet (70), par lequel l'élément de blocage (38) est fixé à l'extrémité d'enfichage (34) de l'élément tubulaire (12).

26. Élément tubulaire selon l'une quelconque des revendications 16 à 25, en tout cas selon les revendications 16 et 24, **caractérisé en ce que** la zone d'extrémité (62) de la branche de fixation (54) et la branche de protection (52) comportent chacune, au niveau de leurs extrémités éloignées du tronçon de liaison (56), un bourrelet de fermeture (64) sensiblement circulaire.

27. Élément tubulaire selon l'une quelconque des revendications 17 à 26, en tout cas selon les revendications 17 et 25, **caractérisé en ce que** la zone d'extrémité (62) de la branche de fixation (54) et la branche de protection (52) sont situées dans deux plans qui se coupent, de telle sorte qu'elles forment une ouverture d'introduction (66) qui se rétrécit dans le sens vers le tronçon de liaison (56) et dans laquelle peut être introduit l'élément tubulaire (12).
